Europäisches Patentamt

European Patent Office

Office européen des brevets

(19)

(11) **EP 0 708 262 B1**

(12) **EUROPÄISCHE PATENTSCHRIFT**

(45) Veröffentlichungstag und Bekanntmachung des Hinweises auf die Patenterteilung:
**23.02.2000 Patentblatt 2000/08**

(51) Int Cl.⁷: **F16C 32/06**, B23K 26/00

(21) Anmeldenummer: **95113018.6**

(22) Anmeldetag: **18.08.1995**

(54) **Aerostatisches Lager und Verfahren zur Herstellung eines aerostatischen Lagers**

Aerostatic bearing and fabrication process of an aerostatic bearing

Palier aérostatique et procédé de fabrication d'un palier aérostatique

(84) Benannte Vertragsstaaten:
**AT CH DE FR GB IT LI NL SE**

(30) Priorität: **10.10.1994 DE 4436156**

(43) Veröffentlichungstag der Anmeldung:
**24.04.1996 Patentblatt 1996/17**

(73) Patentinhaber:
- **Heinzl, Joachim, Prof. Dr.-Ing.**
  **D-81549 München (DE)**
- **Muth, Michael Dipl.-Ing.**
  **81737 München (DE)**
- **Schulz, Bernd, Dipl.-Ing.**
  **85579 Neubiberg (DE)**

(72) Erfinder:
- **Heinzl, Joachim, Prof. Dr.-Ing.**
  **D-81549 München (DE)**
- **Muth, Michael Dipl.-Ing.**
  **81737 München (DE)**
- **Schulz, Bernd, Dipl.-Ing.**
  **85579 Neubiberg (DE)**

(56) Entgegenhaltungen:
EP-A- 0 432 958          EP-A- 0 578 130
WO-A-91/00552           DE-C- 3 001 061
FR-A- 1 414 549          US-A- 3 600 046
US-A- 4 857 698

- H.C. Rothe, Externally pressurized gas bearings, Mechanical Engineering, June 1961, Seiten 45 bis 48

**Beschreibung**

Bei aerostatischen Lagern wird Luft mit Hilfe einer externen Druckluftquelle über eine oder mehrere Drosselstellen (Düsen) in den Lagerspalt zwischen den beiden Lagerflächen gedrückt. Auf diese Weise wird ein Luftpolster geschaffen, in dem ein so hoher Luftdruck herrscht, daß eine Last von diesem getragen werden kann. Der Druck fällt im Lagerspalt vom Düsendruck $p_i$ am Düsenrand zum Umgebungsdruck $p_a$ am Lagerrand rasch ab. Deshalb muß zur Erhöhung der Tragfähigkeit die Anzahl der Düsen vergrößert werden. Dem steht jedoch eine wirtschaftliche Fertigung im Wege. Abhilfe schaffen Kammern und Kanäle um die einzelnen Düsen, die zur Verteilung der Luft im Lagerspalt und damit zur Erhöhung der Tragkraft dienen; sie sind nach strömungstechnischen Gesichtspunkten dimensioniert. Von Nachteil ist das sogenannte Totvolumen dieser Kammern und Kanäle, das die Neigung der Lager zu selbsterregten Schwingungen erhöht.

Sehr viele einzelne Mikrodüsen besitzen sogenannte poröse Lager, bei denen das Lagermaterial porös und damit für Luft durchlässig ist. Im allgemeinen sind diese luftdurchlässigen Stellen gleichmäßig über die Lagerfläche verteilt, so daß man ein einheitliches Druckprofil über den gesamten Lagerspalt erhält und damit eine hohe Tragkraft. Liegt bei diesen Lagern der engste Querschnitt der Mikrodüsen nicht unmittelbar in der Lagerfläche, so erhält man wie bei Düsenlagern mit Kammern und Kanälen ein für den dynamischen Betrieb ungünstiges Totvolumen. Aus diesem Grund wurden Verfahren entwickelt, bei denen das poröse Material an der Lagerfläche bis in eine gewisse Schichttiefe entweder gezielt verdichtet wird (DE-C-34 39 648) oder aber vollständig verschlossen wird (DE-C-32 30 232), um diese Schicht anschließend wieder definiert zu öffnen. Die erforderlichen Prozesse sind insgesamt gesehen schwer zu beherrschen, insbesondere, wenn bestimmte Strömungswiderstände der Drosselschicht eingestellt werden sollen und zugleich eine gleichmäßige Verteilung der Drosselstellen über der Lagerfläche erreicht werden soll.

Ein verdichtetes poröses Lager, bei dem die verdichtete Schicht mittels eines Lasers wieder partiell geöffnet wird, ist aus der EP-A-0 237 627 bekannt. Diese Öffnung erfolgt von der Lagerspaltseite her, was strömungstechnische Nachteile zur Folge hat.

Die Metallbearbeitung mittels eines Lasers ist in vielen Literaturstellen beschrieben. Das Laserbohren ist beispielsweise in dem Artikel "Laser Drilling" von Yukitaka Nagano in der Zeitschrift Technocrat November 1978, Seiten 19 bis 25 beschrieben. In dem Buch von George Chryssolouris "Laser Machining", 1991, Springer-Verlag ist auf Seite 209 als Anwendungsbeispiel für das Laserbohren die Erzeugung von "aerosol nozzles" angeführt. "Aerosol nozzles" sind keine Düsen für Luftlager, bei denen strömungstechnische Besonderheiten zu beachten sind.

Weitere Luftlager sind in der US-A-3 600 046, der FR-A-1 414 549 und der DE-C-30 01 061 beschrieben. Die Düsen sind kegelförmig ausgebildet dargestellt. Bei der US-A-3 600 046 liegt der engste Querschnitt unmittelbar an der Lagerfläche. Bei der FR-A-1 414 549 werden die Düsen durch doppelkegelige Bohrungen in Steinen, die in Bohrungen des Lagergehäuses eingesetzt sind, gebildet. Bei der DE-C-30 01 061 sind auf der Seite des Lagerspaltes Nuten vorgesehen, welche das dynamische Verhalten des Luftlagers nachteilig beeinflussen. Ein weiteres Luftlager ist aus der EP-A-0 578 130 bekannt, bei dem in einem dünnen Bereich pyramidenförmige Bohrungen eingebracht sind, wobei der engste Querschnitt unmittelbar an der Lagerfläche liegt.

In dem Artikel "Externally pressurized gas bearings" von H.C. Roth in der Zeitschrift "Mechanical Engineering", Juni 1961, Seiten 45 bis 48 ist ein Luftlager angegeben, bei dem der Bereich um die Mikrolöcher als Folie, in die das Mikroloch mittels einer Nadel mechanisch eingebracht wurden, ausgebildet ist.

Der Erfindung liegt die Aufgabe zugrunde, mit einem geringen fertigungstechnischen Aufwand ein aerostatisches Lager zu schaffen, das gute statische sowie dynamische Eigenschaften aufweist.

Diese Aufgabe wird erfindungsgemäß durch die Merkmale der Ansprüche 1 und 7 gelöst.

Die Vorteile der Erfindung bestehen darin, daß die Anzahl der Düsen in der Lagerfläche so groß ausgeführt werden kann, daß die guten statischen Eigenschaften eines aerostatischen Lagers aus porösem Werkstoff näherungsweise erreicht werden. Weiterhin können die guten dynamischen Eigenschaften eines oberflächenverdichteten porösen Lagers dadurch erreicht werden, daß sich der engste Querschnitt der Düsen unmittelbar an der Lagerfläche befindet. Gemäß der Erfindung werden also mit einem geringen fertigungstechnischen Aufwand die Vorteile der verschiedenen aerostatischen Lagertypen nutzbar.

Ein weiterer Vorteil der Erfindung besteht darin, daß das Bohren der Düsen mittels eines Lasers auch bei ungünstigen geometrischen Verhältnissen, wie z.B. bei Zylinderlagern mit kleinem Durchmesser möglich ist.

Weitere Vorteile der Erfindung bestehen darin, daß durch die gezielte Materialschwächung im Bereich der Düsen die Herstellung der Düsen mittels eines Lasers durchgeführt werden kann, bei dem sich durch die Steuerung des Laserstrahls beim Bohren der Löcher auf einfache Weise die Strömungswiderstände in der Lagerfläche mit einer hohen Reproduzierbarkeit einstellen lassen. Dadurch kann der Luftverbrauch einer Einzeldüse so niedrig gehalten werden, daß eine große Anzahl Düsen für eine hohe statische Tragkraft eingebracht werden kann, ohne daß der Gesamtluftverbrauch der Lager derart hoch ausfällt, daß ein wirtschaftlicher Betrieb aufgrund der Betriebskosten nicht mehr möglich ist. Weiterhin kann durch die Bearbeitungsrichtung, nämlich von der Lagerrückseite her, und eine gezielte Energiezufuhr durch den Laserstrahl erreicht werden, daß die Düsen unmittelbar an der Lagerfläche ihren engsten Querschnitt besitzen und an der Lagerseite gratfrei sind, so daß eine Nachbearbeitung der Lagerfläche zur Einhaltung der Form- und Oberflächentoleranzen entfallen kann.

Durch die Bearbeitung mittels Laser lassen sich nahezu beliebige Verteilungen der Düsen in der Lagerfläche erreichen, um die Lager an bestimmte Belastungsfälle anpassen zu können.

Die vorgeschlagenen Verfahren ermöglichen eine automatisierte Fertigung. Die Produktionskosten können so niedrig gehalten werden, daß der Einsatz für Großserien möglich wird.

Vorteilhafte Ausbildungen der Erfindung entnimmt man den abhängigen Ansprüchen.

Die Erfindung wird nachfolgend anhand von Ausführungsbeispielen näher erläutert.

Es zeigt

Figur 1 ein erfindungsgemäß ausgestaltetes aerostatisches Lager,

Figur 2 einen Ausschnitt aus Figur 1,

Figur 3 eine der in Figur 2 dargestellten Düse im Detail und

Figur 4 einen Ausschnitt eines weiteren aerostatischen Lagers.

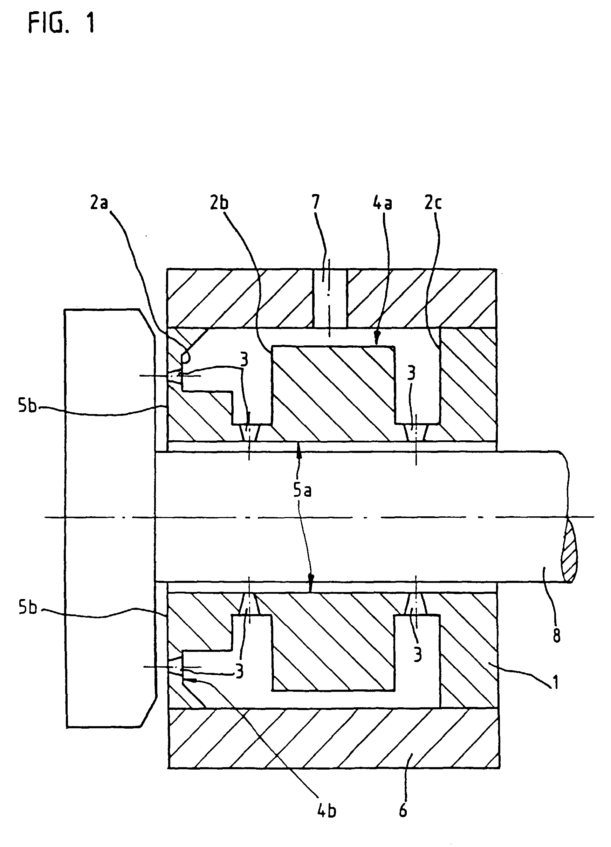

Das aerostatische Lager gemäß Figur 1 ist ein kombiniertes Axial- und Radiallager. Der Lagerkörper 1 weist eine axiale Ringnut 2a sowie zwei radiale Nuten 2b, 2c auf, durch die eine gezielte Verringerung der Materialstärke im Bereich der Löcher 3 - welche die Düsen bilden - erreicht wird. In diese gezielt geschwächten Bereiche werden die kegelig geformten Löcher 3 am Umfang verteilt mit einem Laser von der Lagerrückseite 4a, 4b in die Lagerflächen 5a, 5b gebohrt. Der Lagerkörper 1 sitzt in einem Ring 6, mit einer Zuführöffnung 7, über die die Luftzufuhr erfolgt. Die Welle 8 wird somit von einer axial und zwei radial angeordneten Lochreihen auf Luftpolstern getragen. Ein Kegelpreßsitz zwischen dem Lagerkörper 1 und dem Ring 6 ermöglicht beim Einbau eine gleichmäßige Abnahme des Lagerdurchmessers - und damit der Lagerspalthöhe - über die gesamte Lagerlänge.

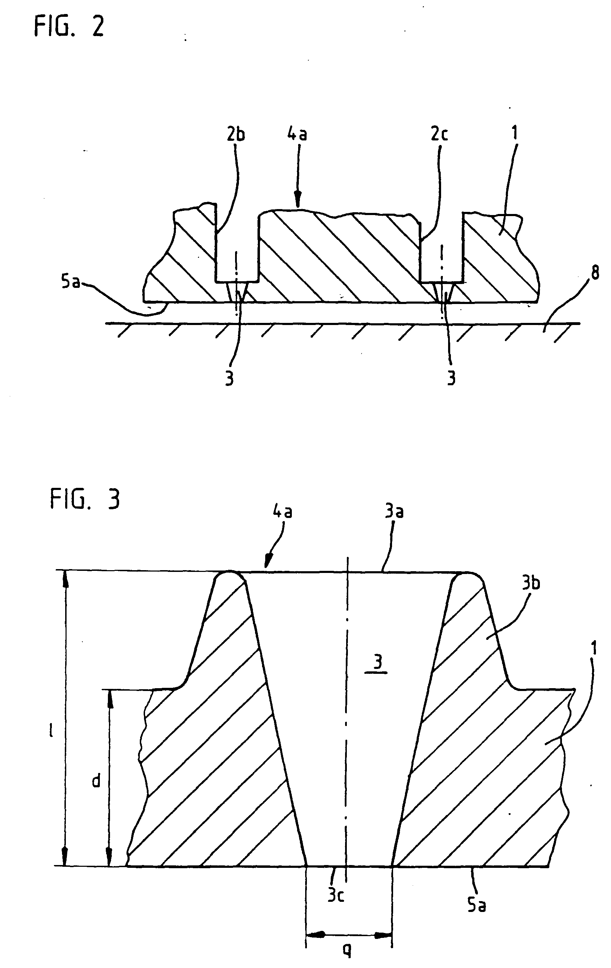

Der in Figur 2 dargestellte Ausschnitt zweier Löcher 3 zeigt, daß in die Lagerfläche 5a von der Rückseite 4a aus mehrere flächig verteilt angeordnete Löcher 3 durch eine gezielte Energiezufuhr des Laserstrahls gratfrei gebohrt werden können, so daß die Lagerfläche 5a nicht mehr nachbearbeitet werden muß. Die Löcher 3 sind kegelig geformte Mikrolöcher, die mit ihrem engsten Querschnitt unmittelbar an der Lagerfläche 5a die Düsen des aerostatischen Lagers bilden.

In Figur 3 ist eine vorteilhafte Ausgestaltung eines Loches 3 im Detail dargestellt. Die Energiezufuhr des Laserstrahls ist dabei derart gesteuert, daß am Locheintritt 3a, also auf der Lagerrückseite 4a ein hoher Grat 3b zur Verlängerung der Drosselstelle und damit zur Verringerung von Strömungsturbulenzen entsteht und am Lochaustritt 3c, also an der Lagerfläche 5a ein Grat zur Vermeidung einer Nachbearbeitung verhindert wird. Die Gratbildung 3b am Locheintritt 3a, also gegenüber der Lagerfläche 5a, wird beim Laserbohren gezielt genutzt.

Die gezielte Materialschwächung des Lagerkörpers 1 in unmittelbarer Umgebung der Löcher 3 erfolgt auf eine verbleibende Materialstärke von 0,1 mm bis 2 mm. Diese Dicke d läßt ein Bohren der Löcher 3 mit dem Laser zu und gewährleistet zugleich eine ausreichende Formstabilität des Lagerkörpers 1 beim Einbau in den Ring 6.

Um eine turbulenzarme Strömung beim Austritt der Luft aus der Düse in den Lagerspalt zu erreichen und damit ein Lagerrauschen auch bei hohen Versorgungsdrücken zu verhindern, sollte das Verhältnis Lochlänge 1 zum engsten Lochdurchmesser q an der Lagerfläche 5a größer oder gleich drei sein:

$$l/q \geq 3$$

Der Lochdurchmesser q sollte kleiner als 100μm, vorzugsweise aber sogar kleiner als 50μm sein.

Um gute Notlaufeigenschaften zu erreichen, weist die Lagerpaarung Bronze gegen Stahl auf. Beispielsweise besteht der Lagerkörper 1 aus Bronze und die Welle 8 aus Stahl. Aus Stabilitätsgründen sitzt bei dem Radiallager gemäß Figur 1 der Lagerkörper 1 in einem Ring 6 aus Stahl.

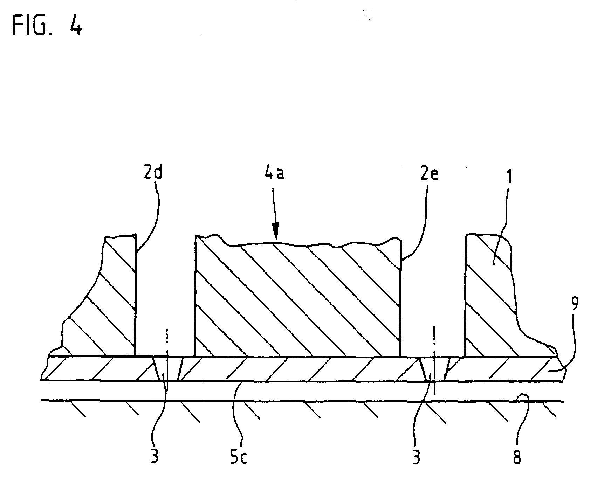

In Figur 4 ist ein weiteres Ausführungsbeispiel der Erfindung dargestellt. Der Lagerkörper 1 weist ebenfalls im Bereich der Löcher 3 Nuten 2d und 2e auf. Der Unterschied zu dem vorher beschriebenen Beispiel besteht darin, daß die Nuten Durchbrüche bilden. Die geringe Materialstärke im Bereich der Löcher 3 wird durch ein separates Bauteil in Form einer dünnen Metallfolie 9 gebildet. Die Löcher 3 können vor dem Aufbringen der Metallfolie 9 auf den Lagerkörper 1 durch Laserstrahlbohren eingebracht werden, oder nach erfolgter Verbindung beider Körper 1 und 9. Dieses Ausführungsbeispiel hat den Vorteil, daß der Lagerkörper 1 selbst nur relativ grob bearbeitet werden muß, er kann beispielsweise ein Gußteil oder ein Sinterkörper sein. Auch hier ist eine Nachbearbeitung der Lagerfläche 5a nach dem Bohren nicht mehr erforderlich.

Auch bei dem Ausführungsbeispiel gemäß Figur 4 sollen die zu Figur 3 angeführten Dimensionierungen der Löcher 3 eingehalten werden. Die Dicke der Folie 9 beträgt ebenfalls 0,1 bis 2 mm.

Bei allen Ausführungsformen ist es vorteilhaft, wenn das Lager eine Vielzahl von Löchern 3 aufweist. Viele Löcher bei einem akzeptablen GesamtLuftverbrauch lassen sich nur realisieren, wenn der Luftverbrauch eines einzelnen Loches 3 niedrig gehalten wird. Dies erfordert einen kleinen Durchmesser q. Ein Durchmesser q kleiner 50µm ist aber nur sinnvoll, wenn die Lagerfläche 5a, 5b, 5c oder die Metallfolie 9 nicht mehr bearbeitet werden muß. Aus diesem Grund ist es wichtig, daß die Lagerfläche 5a, 5b, 5c vor dem Einbringen der Löcher 3 auf die erforderliche Form- und Oberflächentoleranz bearbeitet wird. Ein nachträgliches Bearbeiten würde ein teilweises Zuschmieren der Löcher 3 zur Folge haben, womit eine Verschlechterung der Lagerparameter verbunden wäre.

Die Erfindung ist auch bei Linearlagern mit Erfolg einsetzbar.

**Patentansprüche**

1. Aerostatisches Lager mit mehreren Mikrolöchern (3) als Düsen, wobei der Bereich unmittelbar um die Mikrolöcher (3) eine dünne Materialstärke von 0,1 bis 2 mm aufweist, und wobei die Mikrolöcher (3) in diesem dünnen Bereich mittels eines Laserstrahls von der Rückseite (4a, 4b) der Lagerfläche (5a, 5b, 5c) her eingebracht sind und einen kegeligen Querschnitt aufweisen, wobei der engste Querschnitt, der kleiner als 100 µm ist, unmittelbar an der Lagerfläche (5a, 5b, 5c) liegt.

2. Aerostatisches Lager nach Anspruch 1, dadurch gekennzeichnet, daß die Mikrolöcher (3) in den Lagerkörper (1) eingebracht sind, wobei der Lagerkörper (1) in unmittelbarer Umgebung der Mikrolöcher (3) eine gezielte Materialschwächung aufweist.

3. Aerostatisches Lager nach Anspruch 1, dadurch gekennzeichnet, daß die Mikrolöcher (3) in ein separates dünnes Bauteil (9) eingebracht sind, wobei dieses Bauteil (9) eine Lagerfläche (5c) bildet und mit einem Lagerkörper (1) verbunden ist, der Öffnungen (2d, 2e) zur Speisung der Düsen aufweist, die einen größeren Querschnitt als die Mikrolöcher (3) besitzen.

4. Aerostatisches Lager nach Anspruch 3, dadurch gekennzeichnet, daß das dünne Bauteil eine Metallfolie (9) ist.

5. Aerostatisches Lager nach einem der Ansprüche 1 bis 4, dadurch gekennzeichnet, daß die Luftzufuhr zu den Löchern (3) von der Seite (3a) mit dem größten Durchmesser erfolgt, und daß die Löcher (3) auf dieser Seite (3a) einen die Länge (1) der Löcher (3) verlängernden Grat (3b) aufweisen.

6. Aerostatisches Lager nach einem der Ansprüche 1 bis 5, dadurch gekennzeichnet, daß das Verhältnis von Lochlänge (1) zum engsten Lochdurchmesser (q) an der Lagerfläche (5a) größer oder gleich drei ist.

7. Verfahren zum Herstellen eines aerostatischen Lagers mit mehreren Mikrolöchern (3) als Düsen, wobei die Materialstärke (d) im Bereich der Mikrolöcher (3) 0,1 bis 2 mm ist, wobei die Mikrolöcher (3) in diesem Bereich mittels eines Laserstrahls von der Rückseite (4a, 4b) der Lagerfläche (5a, 5b, 5c) eingebracht werden und einen kegeligen Querschnitt aufweisen, wobei der engste Querschnitt, der kleiner als 100 µm ist, unmittelbar an der Lagerfläche liegt, und wobei die Lagerfläche (5a, 5b, 5c) vor dem Einbringen der Löcher (3) auf die erforderliche Form- und Oberflächentoleranz bearbeitet wird.

8. Verfahren nach Anspruch 7, dadurch gekennzeichnet, daß die Impulsführung und damit die Energiezufuhr des Laserstrahls so gesteuert wird, daß jeweils am Locheintritt (3a) ein hoher Grat (3b) zur Verlängerung der Drosselstelle und damit zur Verringerung von Strömungsturbulenzen entsteht und am Lochaustritt (3c) ein Grat zur Vermeidung einer Nachbearbeitung verhindert wird.

9. Verfahren nach Anspruch 8, dadurch gekennzeichnet, daß der engste Lochquerschnitt dadurch gesteuert wird, daß über einen Sensor auf der Seite der Lagerfläche (5a, 5b, 5c) das Auftreffen des Laserstrahls erfaßt wird und der Bohrprozeß insbesondere durch das Abschatten des Laserstrahls beim Erreichen eines vorgewählten Schwellwertes gezielt abgebrochen wird.

**Claims**

1. Aerostatic bearing with a plurality of micro-holes (3) as nozzles, the region directly around the micro-holes (3) having a thin material thickness of 0.1 to 2 mm and the micro-holes (3) in this thin region being inserted from the rear side (4a, 4b) of the bearing face (5a, 5b, 5c) by means of a laser beam and said micro-holes having a conical cross-section, the narrowest cross-section, which is smaller than 100 pm, being situated directly at the bearing surface (5a, 5b, 5c).

2. Aerostatic bearing according to claim 1, characterised in that the micro-holes (3) are inserted in the bearing body (1), the bearing body (1) having a targeted weakening of the material in the immediate vicinity of the micro-holes (3).

3. Aerostatic bearing according to claim 1 characterised in that the micro-holes (3) are inserted in a separate thin component (9), this component (9) forming a bearing face (5c) and being connected to a bearing body (1) which has openings (2d, 2e) for feeding the nozzles which have a greater cross-section than the micro-holes (3).

4. Aerostatic bearing according to claim 3, characterised in that the thin component is a metallic foil (9).

5. Aerostatic bearing according to one of the claims 1 to 4, characterised in that the air supply to the holes (3) is effected form the side (3a) with the largest diameter, and in that the holes (3) have burring (3b) lengthening the length (1) of the holes (3) on this side (3a).

6. Aerostatic bearing according to one of the claims 1 to 5, characterised in that the ratio of hole length (1) to the narrowest hole diameter (q) on the bearing face (5a) is greater than or equal to three.

7. Method for producing an aerostatic bearing with a plurality of micro-holes (3) as nozzles, the material thickness (d) in the region of the micro-holes (3) being 0.1 to 2 mm, the micro-holes (3) being inserted in this region from the rear side (4a, 4b) of the bearing face (5a, 5b, 5c) by means of a laser beam and having a conical cross-section, the narrowest cross-section, which is smaller than 100 pm, being situated directly on the bearing face and the bearing face (5a, 5b, 5c) being processed to the required configuration- and surface tolerance before insertion of the holes (3).

8. Method according to claim 7, characterised in that the pulse control and hence the energy supply of the laser beam is controlled such that high burring (3b) is produced respectively at the hole entrance (3a) to extend the flow reduction zone and hence to reduce flow turbulences, and at the hole exit (3c) burring is avoided to obviate reprocessing.

9. Method according to claim 8, characterised in that the narrowest hole cross-section is controlled in that the impact of the laser beam is detected via a sensor on the side of the bearing face (5a, 5b, 5c) and the drilling process is terminated especially by the shielding of the laser beam specifically upon reaching a pre-selected threshold value.

**Revendications**

1. Palier aérostatique comportant plusieurs microtrous (3) en tant que buses, la zone située immédiatement autour des microtrous (3) présentant une faible épaisseur de matière de 0,1 mm à 2 mm, les microtrous (3), dans cette zone de faible épaisseur, étant réalisés au moyen d'un rayon laser, depuis la face arrière (4a, 4b) de la surface de palier (5a, 5b, 5c) et présentant une section transversale conique, la section la plus étroite, laquelle est inférieure à 100 μm, étant située directement au niveau de la surface de palier (5a, 5b, 5c).

2. Palier aérostatique selon la revendication 1, caractérisé par le fait que les microtrous (3) sont aménagés dans le corps de palier (1), le corps de palier (1) présentant une réduction d'épaisseur adaptée dans le voisinage immédiat des microtrous (3).

3. Palier aérostatique selon la revendication 1, caractérisé par le fait que les microtrous (3) sont aménagés dans un composant (9) fin séparé, ledit composant (9) formant une surface de palier (5c) et étant lié à un corps de palier (1) pourvu d'orifices (2d, 2e) pour l'alimentation des buses, qui présentent une section plus grande que les mircrotrous (3).

4. Palier aérostatique selon la revendication 3, caractérisé par le fait que le composant fin est une feuille de métal (9).

5. Palier aérostatique selon une des revendications 1 à 4, caractérisé par le fait que l'alimentation en air des trou (3) a lieu du côté (3a) présentant le plus grand diamètre et par le fait que les trous (3), de ce côté, présentent une arête (3b) qui prolonge la longueur (1) des trous (3).

6. Palier aérostatique selon une des revendications 1 à 5, caractérisé par le fait que le rapport de la longueur de trou (1) au diamètre de trou le plus faible (q), au niveau de la surface de palier (5a), est supérieur ou égal à 3.

7. Procédé de fabrication d'un palier aérostatique comportant plusieurs microtrous (3) en tant que buses, l'épaisseur de matière (d) dans la région des microtrous (3) étant comprise entre 0,1 et 2 mm, les microtrous (3), dans cette zone étant réalisés à l'aide d'un rayon laser, depuis la face arrière (4a, 4b) de la surface de palier (5a, 5b, 5c), et présentant une section transversale conique, la section la plus étroite, laquelle est inférieure à 100 μm étant située directement au niveau de la surface de palier et la surface de palier (5a, 5b, 5c) étant usinée aux tolérances de forme et de surface nécessaires avant l'usinage des trous (3).

8. Procédé selon la revendication 7, caractérisé par le fait que l'on commande les impulsions, c'est-à-dire l'apport d'énergie du rayon laser de manière à former chaque fois, à l'entrée du trou (3a), une arête (3b) élevée pour prolonger l'étranglement et diminuer ainsi les turbulences d'écoulement et de manière à éviter la formation d'une arête exigeant une reprise d'usinage à la sortie (3c) du trou.

9.  Procédé selon la revendication 8, caractérisé par le fait que la section de trou la plus étroite est contrôlée en détectant à l'aide d'un senseur disposé côté surface de palier (5a, 5b, 5c) le débouché du rayon laser et arrêtant le processus de perçage, en particulier par masquage du rayon laser, dès qu'une valeur seuil pédéterminée est atteinte.

# FIG. 1

FIG. 2

FIG. 3

FIG. 4